# EUROPEAN PATENT SPECIFICATION

(11) **EP 3 745 363 B1**
(45) Date of publication and mention of the grant of the patent: **15.03.2023**
(21) Application number: 20166628.6
(22) Date of filing: 30.03.2020
(51) Int. Cl.: G07C 5/08, G06Q 10/00

(54) **FILTER SUPERVISION SYSTEM AND SUPERVISION METHOD THEREOF**
FILTERÜBERWACHUNGSSYSTEM UND ÜBERWACHUNGSVERFAHREN DAFÜR
SYSTÈME DE SURVEILLANCE DE FILTRE ET SON PROCÉDÉ DE SURVEILLANCE

(30) Priority: 27.05.2019 CN 201910454602
(43) Date of publication of application: 02.12.2020
(73) Proprietor: Wal Fuel Systems (Hefei) Co., Ltd., Hefei City, Anhui 230000 (CN)
(72) Inventor: Shi, Zhongcheng, Hefei City, Anhui 230000 (CN); Huang, Xiaohu, Hefei City, Anhui 230000 (CN); Ma, Yecun, Hefei City, Anhui 230000 (CN); Fan, Xinjun, Hefei City, Anhui 230000 (CN)
(74) Representative: karo IP

(56) References cited:
- WO-A1-2015/057956
- WO-A1-2019/090319
- US-A1- 2011 220 560

## Description

### Technical Field

The invention relates to a filter supervision system capable of identifying the authenticity of a filter element of the filter and a filter supervision method.

### Background Art

The filters under common use presently are ordinary filters which, from the perspective of monitoring and managing the filters, cannot collect information integrally such as the use state of a filter, and therefore, filter manufacturers and sellers cannot know the actual use condition of the filter.

In order to ensure the use safety and the service life of a filter, plenty of data of the use state of the filter need to be known and mastered in time, such as when the filter is replaced, how much mileage is used at the time of replacement, the mileage sum of the vehicle at the time of replacement, whether the filter for replacement is genuine or an inferior counterfeit, whether the filter has reached the end of its service life when replaced, whether the filter currently needs to be drained, how is the current internal fuel temperature of the filter, and whether the fuel used in the filter is a genuine standard grade oil or inferior fuel that cannot meet the requirement, etc..

WO 2015/057956 A1 discloses a filter monitoring system (FCM) that is arranged in a vehicle to monitor the filters arranged in the same vehicle. Thus, each vehicle is provided with its own FCM to perform complex computing tasks for the filter monitoring.

### Summary of the Invention

The technical problem to be solved by the invention is to provide a filter supervision system according to claim 1.

Another technical problem to be solved by the invention is to provide a filter supervision method according to claim 5.

For a filter supervision system, the invention adopts the technical solution that the filter supervision system comprises a remote server and a filter for filtering a fuel of a vehicle wherein the filter is provided thereon with a genuine product identification unit, wherein a NFC chip storing filter element product information that at least includes the product serial number is provided on a filter element inside the filter; and wherein the filter is provided with a pressure difference sensor for collecting a pressure difference between the front and the back of the filter element, a temperature sensor for collecting a temperature of the fuel in the filter, a water level sensor for collecting a water level and a fuel quality sensor for collecting fuel quality information; wherein the genuine product identification unit reads the filter element product information that at least includes the product serial number stored inside the NFC chip through NFC communication; to access a product database of the filter through a wireless communication network, and to identify and confirm whether the filter element is genuine or not;- the genuine product identification unit is connected with the pressure difference sensor, the temperature sensor, the water level sensor and the fuel quality sensor and is configured to, under the condition of confirming that the filter element is genuine, collect the pressure difference, the water level, the temperature and/or the fuel quality information of the running filter; and the genuine product identification unit sends the read filter element product information and the collected pressure difference, water level, temperature and/or fuel quality information to the remote server through a wireless communication network; and wherein
the remote server processes the collected pressure difference, water level, temperature and/or fuel quality information and forwards the genuine product identification result of the filter element and the processing result of the pressure difference, water level, temperature and/or fuel quality information of the filter to a user.

Preferably, the genuine product identification unit is also connected with an automobile electronic control unit ECU in a CAN bus communication mode, and communicates with the automobile electronic control unit ECU to read the mileage information of the whole vehicle.

Further preferably, the genuine product identification unit is provided with a local state indication interface, an instrument panel state indication interface and a local data storage interface;
the local state indication interface, the instrument panel state indication interface and the local data storage interface are connected with the automobile electronic control unit ECU in a CAN bus communication mode.

Preferably, the remote server forwards the processing result of the filter element product information to the user in the form of a mobile phone APP or a WeChat applet.

For a filter supervision method, the invention adopts the technical solution that a filter supervision method, in which a filter for filtering a fuel of a vehicle comprises a filter element. The filter is provided thereon with a genuine product identification unit, the filter element being provide with an NFC chip storing filter element product information that at least includes the product serial number. The filter is also provided with a pressure difference sensor, a temperature sensor, a water level sensor and a fuel quality sensor. The method comprises the following steps:
(1) the genuine product identification unit reads the filter element product information including the product serial number inside the NFC chip through NFC communication and acquires filter element product information including the product serial number, the genuine product identification unit accesses a product database of the filter through a wireless communication network, identifies and confirms whether the filter element is genuine or not;
(2) under the condition of confirming that the filter element is genuine, the genuine product identification unit collects pressure difference between the front and the back of the filter element measured by the pressure difference sensor, water level measured by the water level sensor, temperature of the fuel in the filter measured by the temperature sensor and/or fuel quality information measured by the fuel quality sensor of the running filter ;
(3) the genuine product identification unit transmits the collected pressure difference, water level, temperature and/or fuel quality information of the filter through a SIM card to the remote server via a wireless communication network for receiving;
(4) the remote server processes the collected pressure difference, water level, temperature and/or fuel quality information of the filter and monitoring the filter in real time;
(5) the remote server forwards the genuine product identification confirmation result of the filter element and the processing result of the pressure difference, water level, temperature and/or fuel quality information of the filter to the user.

Preferably, in step (2), the genuine product identification unit also collects GPS position information, driving mileage information of the vehicle and other data information that the whole vehicle is willing to disclose via a vehicle CAN bus interface.

Preferably, in step (5), the remote server forwards the genuine product identification confirmation result of the filter element and the processing result of the pressure difference, water level, temperature and/or fuel quality information of the filter to the user in the form of a mobile phone APP or a WeChat applet, or provides a webpage for the client to visit by the OEM/main engine plant/maintenance factory, or allows customer access by a client end.

The invention has the following beneficial effects:
It can identify and confirm the authenticity of the filter element product used in the filter on the whole vehicle, and take corresponding product protection measures according to the identification result to better protect the performance and the reliability of the vehicle, especially for the fuel supply system and the engine, and to provide users with better service.

### Brief Description of the Drawings

The invention will now be described in further detail with reference to the accompanying drawings and specific embodiments.
Fig. 1 is an overall architecture diagram of an embodiment of a filter supervision system of the invention.
Fig. 2 is a hardware functional block diagram of an intelligent monitoring terminal according to an embodiment of the filter supervision system of the invention.

### Detailed Description of the Invention

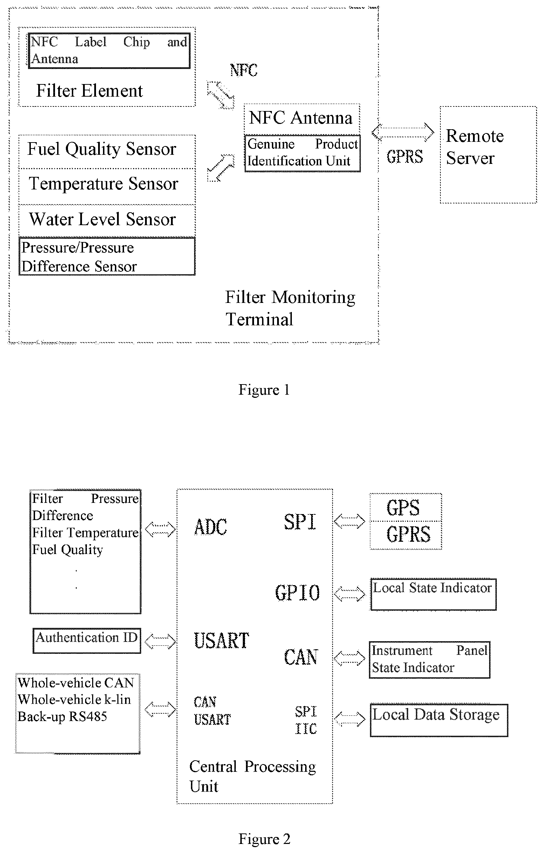

Fig. 1 is a filter supervision system consisting of a remote server and a genuine product identification unit. The genuine product identification unit is arranged on the filter, and an NFC chip at least storing a product serial number is arranged on a filter element inside the filter. Meanwhile, the filter is also provided with a pressure difference sensor, a temperature sensor, a water level sensor and a fuel quality sensor, as well as a GPRS module and a satellite navigation module, wherein the satellite navigation module adopts a global positioning system GPS module or a Beidou satellite navigation system module.

The NFC chip is connected with the genuine product identification unit in an NFC communication mode, and the genuine product identification unit reads filter element product information which at least includes a product serial number and is stored inside the NFC chip through the NFC communication.

The genuine product identification unit is further connected with the pressure difference sensor, the temperature sensor, the water level sensor and the fuel quality sensor and collects the pressure difference, the water level, the temperature and/or the fuel quality information of the running filter.

The genuine product identification unit sends the collected filter element product information and the pressure difference, the water level, the temperature and/or the fuel quality information of the filter to a remote server through a GPRS module or other wireless communication networks.

The remote server processes the collected filter element product information and the pressure difference, the water level, the temperature and/or the fuel quality information of the filter, and forwards the processed filter element product information and the filter information processing result to a user in the form of a mobile phone APP or a WeChat applet.

The genuine product identification unit is provided with a local state indication interface, an instrument panel state indication interface and a local data storage interface, and the genuine product identification unit is connected with an electronic control unit ECU of an automobile installed with the filter in a CAN bus communication mode through the local state indication interface, the instrument panel state indication interface and the local data storage interface.

The genuine product identification unit is connected with the remote server through a GPRS module or other wireless communication networks. The genuine product identification unit attains positioning through a global positioning system GPS module or a Beidou satellite navigation system module.

A central processing unit of the genuine product identification unit is an STM32 F103, of which a hardware functional block diagram is shown in Fig. 2.

In this embodiment, the genuine product identification unit and the NFC chip storing the product serial number arranged on the filter element, the pressure difference sensor, the temperature sensor, the water level sensor and the fuel quality sensor, as well as the GPRS module and the satellite navigation module arranged on the filter together form a filter monitoring terminal. The filter monitoring terminal is connected with a whole-vehicle electronic control unit ECU in a CAN bus communication mode through a local data storage interface, and is meanwhile connected with a remote server through a wireless communication network, to form a filter supervision system.

A filter supervision method based on the filter supervision system, wherein the filter comprises a filter element, comprises the following steps:
(1) the filter being provided with a genuine product identification unit, and the filter element being provided with an NFC chip at least storing a product serial number; the genuine product identification unit reading a product serial number inside the NFC chip through NFC communication and acquiring filter element product information at least including the product serial number, accessing a product database of the filter through a wireless communication network, identifying and confirming whether the filter element is genuine or not.
   If it is detected that the filter element product used in the filter is not genuine, at least one of the following measures is taken to limit the normal use of the vehicle by the user:
   (a) limiting an output torque of the power system under the condition that corresponding authorities and interfaces are opened at the OEM;
   (b) cutting off the oil circuit of the filter by controlling an electromagnetic valve built in the filter;
   (c) simulating the filter to provide a false oil-water sensor signal to the automobile electronic control unit ECU, so that the automobile electronic control unit ECU is forced to limit the power output of the engine and give an alarm on the instrument panel.
(2) under the condition of confirming that the product is genuine, collecting pressure difference, water level, temperature and/or fuel quality information of the running filter through the genuine product identification unit. The genuine product identification unit also collects GPS position information, driving mileage information of the vehicle installed with the filter and other data information that the whole vehicle is willing to disclose via a vehicle CAN bus interface.
(3) the genuine product identification unit transmitting the collected pressure difference, water level, temperature and/or fuel quality information of the filter through a SIM card to the remote server via a wireless communication network for receiving;
(4) the remote server processing the collected pressure difference, water level, temperature and/or fuel quality information of the filter and monitoring the filter in real time;
(5) the remote server forwarding the genuine product identification confirmation result of the filter element and the processing result of the pressure difference, water level, temperature and/or fuel quality information of the filter to the user in the form of a mobile phone APP or a WeChat applet, or providing a webpage for the client to visit by the OEM/main engine plant/maintenance factory, or allowing customer access by a client end.

The filter supervision system of this embodiment has the following functions:

### 1. Authentication

This function is a basic service of the filter supervision system. It performs authenticity identification for the filter element on replacement by a user and feeds back the authentication result at the filter seat in an LED indicator lamp mode; and in a CAN bus communication mode, it displays the authentication result at the instrument panel of the vehicle, so as to ensure the user's right to know about the authenticity of the purchased filter and guide the user to select a genuine filter.

A non-contact authentication scheme based on NFC communication is adopted for the genuine product identification, and an NFC label chip and coil with a product serial number are pre-embedded in the filter element when the filter element leaves the factory. The filter monitoring terminal first reads the product serial number inside the label chip through NFC communication to obtain the filter information, and then accesses the company product database through a GPRS network to confirm whether a current product is genuine or not.

If it is detected that the current product is not genuine, the following measures can be taken to limit the normal use of the vehicle by the user: 1. limiting an output torque of the power system, for which function corresponding authorities and interfaces need to be opened at the OEM; 2. cutting off the oil circuit of the filter, wherein the oil circuit is cut off by controlling an electromagnetic valve built in the filter, and the function can be independently carried out without support from the OEM; 3. simulating an oil-water sensor signal provided by the filter to the ECU of the vehicle to provide a false signal to the ECU, so that the ECU is forced to limit the power output of the engine and give an alarm on the instrument panel, wherein the function can be independently carried out without support from the OEM.

### 2. Real-time monitoring

This function is used for monitoring and recording the condition of the filter in real time during running of the vehicle: main state parameters of the filter, an operation state of the driver, the vehicle's working condition state, the vehicle's operation track and other information. This function can be used for providing abundant original monitoring data.

In the first stage, the monitoring measures to be realized are: pressure difference between the front and the back of the filter element, temperature of the fuel in the filter, and location of the vehicle (based on base station information). Among the three measures above, the pressure difference and the temperature are collected through an analog-to-digital converter (ADC, see Fig. 2) on the intelligent terminal; the vehicle location information is obtained through the base station information provided by the telecommunications operator.

### 3. Statistical analysis

This function is carried out through in-depth mining and statistical analysis of the monitoring data, which can thus provide services such as a filter state, a performance statistical analysis result, a failure statistical analysis result and the like. On one hand, this function can guide the design and development of subsequent products, and on the other hand, this function can be opened to OEMs to assist the optimization of the products, and also opened to the maintenance factory to assist the failure analysis and positioning. According to the function, the right to speak in data docking with the OEMs can be enhanced.

4. Service life estimation: this function realizes an intelligent estimation of the service life of the filter element, and provides a more scientific filter service life result for a terminal user. Traditional filter service life estimation is based on the driving mileage. For example, if the filter element filters fuel to reach a certain driving mileage, it is considered to have reached the end of its service life and needs to be replaced. But in fact, the service life of the filter is closely related to the working condition of the whole machine/whole vehicle. On one hand, incorrect service life estimation may cause the service life of the whole machine/whole vehicle to be shortened, for example, when the vehicle works in a heavy load or a congested road condition for a long time, although a specified mileage is not reached, the performance of the fuel filter has been seriously reduced, and an untimely replacement will lead to growing abrasion of the whole machine/whole vehicle; and on the other hand, incorrect service life estimation may raise the cost of use for the user, for example, when the vehicle works in a light load or an unobstructed road section for a long time, although the specified mileage is reached, the performance of the fuel filter has not been significantly reduced, and a replacement at this moment will lead to waste of cost from the user. This function will realize an intelligent estimation of the service life of the filter in a more scientific way and allow the information to be directly forwarded to a user, which helps the user to reduce the cost of use of the whole vehicle during its full life cycle, and to increase the use viscosity of the system by a terminal user.

## Claims

1. A filter supervision system, **characterized by** comprising a remote server and a filter for filtering a fuel of a vehicle, wherein the filter is provided thereon with a genuine product identification unit, wherein a NFC chip storing filter element product information that at least includes a product serial number is provided on a filter element inside the filter, and wherein the filter is provided with a pressure difference sensor for collecting a pressure difference between the front and the back of the filter element, a temperature sensor for collecting a temperature of the fuel in the filter, a water level sensor for collecting a water level and a fuel quality sensor for collecting fuel quality information; wherein
- the genuine product identification unit is configured to read the filter element product information that at least includes the product serial number stored inside the NFC chip through NFC communication, to access a product database of the filter through a wireless communication network, and to identify and confirm whether the filter element is genuine or not;
- the system being **characterized in that** the genuine product identification unit is connected with the pressure difference sensor, the temperature sensor, the water level sensor and the fuel quality sensor and is configured to, under the condition of confirming that the filter element is genuine, collect the pressure difference, the water level, the temperature and/or the fuel quality information of the running filter; and
- the genuine product identification unit is configured to send the read filter element product information and the collected pressure difference, water level, temperature and/or fuel quality information to the remote server through a wireless communication network;
and **in that** the remote server is configured to process the collected pressure difference, water level, temperature and/or fuel quality information and to forward the genuine product identification result of the filter element and the processing result of the pressure difference, water level, temperature and/or fuel quality information of the filter to a user.

2. The filter supervision system according to claim 1, **characterized in that**: the genuine product identification unit is also connected with an automobile electronic control unit in a CAN bus communication mode, and communicates with the automobile electronic control unit to read the mileage information of the whole vehicle.

3. The filter supervision system according to claim 2, **characterized in that**: the genuine product identification unit is provided with a local state indication interface, an instrument panel state indication interface and a local data storage interface;
the local state indication interface, the instrument panel state indication interface and the local data storage interface are connected with the automobile electronic control unit in a CAN bus communication mode.

4. The filter supervision system according to claim 1, **characterized in that**: the remote server is configured to forward the genuine product identification result of the filter element and the processing result of the pressure difference, water level, temperature and/or fuel quality information of the filter to the user in the form of a mobile phone APP or a WeChat applet.

5. A filter supervision method concerning a filter for filtering a fuel of a vehicle, said filter comprising a filter element and said filter being provided thereon with a genuine product identification unit, the filter element being provide with an NFC chip storing filter element product information that at least includes the product serial number, said filter being also provided with a pressure difference sensor, a temperature sensor, a water level sensor and a fuel quality sensor **characterized by** comprising the following steps:
(1) the genuine product identification unit reads the filter element product information including the product serial number inside the NFC chip through NFC communication and acquires filter element product information including the product serial number, the genuine product identification unit accesses a product database of the filter through a wireless communication network, identifies and confirms whether the filter element is genuine or not;
(2) under the condition of confirming that the filter element is genuine, the genuine product identification unit collects pressure difference between the front and the back of the filter element measured by the pressure difference sensor, water level measured by the water level sensor, temperature of the fuel in the filter measured by the temperature sensor and fuel quality information measured by the fuel quality sensor of the running filter ;
(3) the genuine product identification unit transmits the collected pressure difference, water level, temperature and/or fuel quality information of the filter through a SIM card to a remote server via a wireless communication network for receiving;
(4) the remote server processes the collected pressure difference, water level, temperature and/or fuel quality information of the filter and monitoring the filter in real time;
(5) the remote server forwards the genuine product identification confirmation result of the filter element and the processing result of the pressure difference, water level, temperature and/or fuel quality information of the filter to a user.

6. The filter supervision method according to claim 5, **characterized in that**, in step (2), the genuine product identification unit also collects GPS position information, driving mileage information of a vehicle installed with the filter and other data information that the whole vehicle is willing to disclose via a vehicle CAN bus interface.

7. The filter supervision method according to claim 5, **characterized in that**, in step (5), the remote server forwards the genuine product identification result of the filter element and the processing result of the pressure difference, water level, temperature and/or fuel quality information of the filter to the user in the form of a mobile phone APP or a WeChat applet.

## Patentansprüche

1. Ein Filterüberwachungssystem, **dadurch gekennzeichnet, dass** es einen entfernten Server und einen Filter zur Filtration von Kraftstoff eines Fahrzeugs umfasst, wobei der Filter mit einer Produktechtheits-Identifikationseinheit versehen ist, wobei ein NFC-Chip, der Filterelement-Produktinformationen speichert, die mindestens eine Produktseriennummer umfassen, auf einem Filterelement innerhalb des Filters vorgesehen ist, und wobei der Filter mit einem Druckdifferenzsensor zum Erfassen der Druckdifferenz zwischen der Vorderseite und der Rückseite des Filterelements, einem Temperatursensor zum Erfassen der Temperatur des Kraftstoffs in dem Filter, einem Wasserpegelsensor zum Erfassen des Wasserpegels, und einem Kraftstoffqualitätssensor zum Erfassen von Kraftstoffqualitätsinformationen versehen ist; wobei
- die Produktechtheits-Identifikationseinheit so konfiguriert ist, dass sie die Produktinformationen des Filterelements, die mindestens die im NFC-Chip gespeicherte Produktseriennummer umfassen, über NFC-Kommunikation ausliest, über ein drahtloses Kommunikationsnetz auf eine Filter-Produktdatenbank zugreift und identifiziert und bestätigt, ob das Filterelement echt ist oder nicht;
- das System **dadurch gekennzeichnet ist, dass** die Produktechtheits-Identifikationseinheit mit dem Druckdifferenzsensor, dem Temperatursensor, dem Wasserpegelsensor und dem Kraftstoffqualitätssensor verbunden ist und so konfiguriert ist, dass sie unter der Bedingung, dass die Echtheit des Filterelement bestätigt wird, die Druckdifferenz-, die Wasserpegel-, die Temperatur- und/oder die Kraftstoffqualitätsinformationen des laufenden Filters erfasst; und
- die Produktechtheits-Identifikationseinheit so konfiguriert ist, dass sie die ausgelesenen Produktinformationen des Filterelements und die erfassten Druckdifferenz-, Wasserpegel-, Temperatur- und/oder Kraftstoffqualitätsinformationen über ein drahtloses Kommunikationsnetz an den entfernten Server sendet;
und dadurch, dass
der entfernte Server so konfiguriert ist, dass er die erfassten Druckdifferenz-, Wasserpegel-, Temperatur- und/oder die Kraftstoffqualitätsinformationen verarbeitet und das Ergebnis der Produktechtheits-Identifikation des Filterelements und das Verarbeitungsergebnis der Druckdifferenz-, Wasserpegel-, Temperatur- und/oder Kraftstoffqualitätsinformationen des Filters an einen Benutzer weiterleitet.

2. Filterüberwachungssystem nach Anspruch 1, **dadurch gekennzeichnet, dass** die Produktechtheits-Identifikationseinheit auch mit einer elektronischen Steuereinheit des Fahrzeugs über einem CAN-Bus-Kommunikationsmodus verbunden ist und mit der elektronischen Steuereinheit des Fahrzeugs kommuniziert, um die Fahrdistanzinformationen des gesamten Fahrzeugs auszulesen.

3. Filterüberwachungssystem nach Anspruch 2, **dadurch gekennzeichnet, dass**: Die Produktechtheits-Identifikationseinheit mit einer Schnittstelle zur lokalen Zustandsanzeige, einer Schnittstelle zur Zustandsanzeige am Armaturenbrett und einer Schnittstelle zur lokalen Datenspeicherung versehen ist;
die Schnittstelle zur lokalen Zustandsanzeige, die Schnittstelle zur Zustandsanzeige am Armaturenbrett und die Schnittstelle zur lokalen Datenspeicherung mit der elektronischen Steuereinheit des Fahrzeugs über einem CAN-Bus-Kommunikationsmodus verbunden sind.

4. Filterüberwachungssystem nach Anspruch 1, **dadurch gekennzeichnet, dass** der entfernte Server so konfiguriert ist, dass er das Ergebnis der Produktechtheits-Identifikation des Filterelements und das Verarbeitungsergebnis der Druckdifferenz-, Wasserpegel-, Temperatur- und/oder Kraftstoffqualitätsinformationen des Filters an den Benutzer in Form einer Mobiltelefon-App oder eines WeChat-Applets weiterleitet.

5. Ein Filterüberwachungsverfahren, das einen Filter zur Filtration eines Kraftstoffs eines Fahrzeugs betrifft, wobei der Filter ein Filterelement umfasst und der Filter mit einer Produktechtheits-Identifikationseinheit versehen ist, wobei das Filterelement mit einem NFC-Chip versehen ist, der Produktinformationen des Filterelements speichert, die mindestens die Produktseriennummer umfassen, und wobei der Filter auch mit einem Druckdifferenz-, einem Temperatur-, einem Wasserpegel- und einem Kraftstoffqualitätssensor versehen ist, **dadurch gekennzeichnet, dass** es die folgenden Schritte umfasst:
(1) Die Produktechtheits-Identifikationseinheit liest die Produktinformationen des Filterelements einschließlich der Produktseriennummer aus dem Inneren des NFC-Chips durch NFC-Kommunikation aus und erfasst die Produktinformation des Filterelement einschließlich der Produktseriennummer, die Produktechtheits-Identifikationseinheit greift auf eine Filter-Produktdatenbank über ein drahtloses Kommunikationsnetzwerk zu, identifiziert und bestätigt, ob das Filterelement echt ist oder nicht;
(2) unter der Bedingung, dass die Echtheit des Filterelements bestätigt wird, erfasst die Produktechtheits-Identifikationseinheit die vom Druckdifferenzsensor gemessene Druckdifferenz zwischen der Vorder- und Rückseite des Filterelements, den vom Wasserpegelsensor gemessenen Wasserpegel, die vom Temperatursensor gemessene Temperatur des Kraftstoffs im Filter und die vom Kraftstoffqualitätssensor des laufenden Filters gemessenen Kraftstoffqualitätsinformationen;
(3) die Produktechtheits-Identifikationseinheit überträgt die erfassten Druckdifferenz-, Wasserpegel-, Temperatur- und/oder Kraftstoffqualitätsinformationen des Filters mittels einer SIM-Karte an einen entfernten Server über ein drahtloses Kommunikationsnetz zum Empfang;
(4) der entfernte Server verarbeitet die erfassten Druckdifferenz-, Wasserpegel-, Temperatur- und/oder Kraftstoffqualitätsinformationen des Filters und überwacht den Filter in Echtzeit;
(5) der entfernte Server leitet das Ergebnis der Bestätigung der Produktechtheits-Identifikation des Filterelements und das Ergebnis der Verarbeitung der Druckdifferenz-, Wasserpegel-, Temperatur- und/oder Kraftstoffqualitätsinformationen des Filters an einen Benutzer weiter.

6. Filterüberwachungsverfahren nach Anspruch 5, **dadurch gekennzeichnet, dass** die Produktechtheits-Identifikationseinheit in Schritt (2) auch GPS-Positionsinformationen, Fahrdistanzinformationen eines mit dem Filter versehenen Fahrzeugs und andere Dateninformationen, die das gesamte Fahrzeug bereit ist, über eine Fahrzeug-CAN-Bus-Schnittstelle preiszugeben, erfasst.

7. Filterüberwachungsverfahren nach Anspruch 5, **dadurch gekennzeichnet, dass** der entfernte Server in Schritt (5) das Ergebnis der Produktechtheits-Identifikation des Filterelements und das Verarbeitungsergebnis der Druckdifferenz-, Wasserstands-, Temperatur- und/oder Kraftstoffqualitätsinformationen des Filters an den Benutzer in Form einer Mobiltelefon-App oder eines WeChat-Applets weiterleitet.

## Revendications

1. Système de surveillance de filtre, **caractérisé en ce qu'**il comprend un serveur distant et un filtre pour filtrer un carburant d'un véhicule, ce filtre étant pourvu sur lui d'une unité d'identification de produit authentique, une puce NFC stockant des informations de produit d'élément filtrant qui comprennent au moins un numéro de série de produit étant prévue sur un élément filtrant à l'intérieur du filtre, et le filtre étant pourvu d'un capteur de différence de pression pour recueillir une différence de pression entre l'avant et l'arrière de l'élément filtrant, d'un capteur de température pour recueillir une température du carburant dans le filtre, d'un capteur de niveau d'eau pour recueillir un niveau d'eau et d'un capteur de qualité du carburant pour recueillir des informations sur la qualité du carburant ;
- l'unité d'identification de produit authentique étant configurée de façon à lire les informations de produit de l'élément filtrant qui comprennent au moins le numéro de série du produit stocké à l'intérieur de la puce NFC au moyen d'une communication NFC, afin d'accéder à une base de données de produits du filtre au moyen d'un réseau de communication sans fil, et d'identifier et de confirmer si l'élément filtrant est authentique ou pas ;
- ce système étant **caractérisé en ce que** l'unité d'identification de produit authentique est connectée au capteur de différence de pression, au capteur de température, au capteur de niveau d'eau et au capteur de qualité du carburant, et étant configuré de façon à, sous réserve de la confirmation que l'élément filtrant est authentique, recueillir la différence de pression, le niveau d'eau, la température et/ou les informations sur la qualité du carburant du filtre in situ ; et
- l'unité d'identification de produit authentique étant configurée de façon à envoyer les informations de produit de l'élément filtrant et la différence de pression, le niveau d'eau, la température et/ou les informations sur la qualité du carburant recueillies au serveur distant au moyen d'un réseau de communication sans fil, et **caractérisé en ce que**
le serveur distant est configuré de façon à traiter la différence de pression, le niveau d'eau, la température et/ou les informations sur la qualité du carburant recueillies et à réacheminer le résultat de l'identification de produit authentique de l'élément filtrant et le résultat du traitement de la différence de pression, du niveau d'eau, de la température et/ou des informations sur la qualité du carburant du filtre à un utilisateur.

2. Système de surveillance de filtre selon la revendication 1, **caractérisé en ce que** : l'unité d'identification de produit authentique est aussi connectée à une unité de commande électronique d'automobile dans un mode de communication par bus CAN, et communique avec l'unité de commande électronique d'automobile pour lire les informations de kilométrage du véhicule tout entier.

3. Système de surveillance de filtre selon la revendication 2, **caractérisé en ce que** : l'unité d'identification de produit authentique est pourvue d'une interface d'indication d'état local, d'une interface d'indication d'état de panneau d'instruments et d'une interface de stockage de données locales ;
l'interface d'indication d'état local, l'interface d'indication d'état du panneau d'instruments et l'interface de stockage de données locales étant connectées à l'unité de commande électronique d'automobile dans un mode de communication par bus CAN.

4. Système de surveillance de filtre selon la revendication 1, **caractérisé en ce que** : le serveur distant est configuré de façon à réacheminer le résultat de l'identification de produit authentique de l'élément filtrant et le résultat du traitement de la différence de pression, du niveau d'eau, de la température et ou des informations sur la qualité du carburant du filtre à l'utilisateur sous la forme d'une application mobile ou d'une applette WeChat.

5. Procédé de surveillance de filtre concernant un filtre pour filtrer un carburant d'un véhicule, ledit filtre comprenant un élément filtrant et ledit filtre étant pourvu sur lui d'une unité d'identification de produit authentique, l'élément filtrant étant pourvu d'une puce NFC stockant des informations de produit d'élément filtrant qui comprennent au moins le numéro de série du produit, ledit filtre étant aussi pourvu d'un capteur de différence de pression, d'un capteur de température, d'un capteur de niveau d'eau et d'un capteur de qualité du carburant, **caractérisé en ce qu'**il comprend les étapes suivantes :
(1) l'unité d'identification de produit authentique lit les informations de produit d'élément filtrant comprenant le numéro de série du produit à l'intérieur de la puce NFC au moyen d'une communication NFC et acquiert des informations de produit d'élément filtrant comprenant le numéro de série du produit, l'unité d'identification de produit authentique accède à une base de données de produits du filtre au moyen d'un réseau de communication sans fil, identifie et confirme si l'élément filtrant est authentique ou pas ;
(2) sous réserve de la confirmation que l'élément filtrant est authentique, l'unité d'identification de produit authentique recueille la différence de pression entre l'avant et l'arrière de l'élément filtrant mesurée par le capteur de différence de pression, le niveau d'eau mesuré par le capteur de niveau d'eau, la température du carburant dans l'élément filtrant mesurée par le capteur de température et les informations sur la qualité du carburant mesurées par le capteur de qualité du carburant du filtre in situ ;
(3) l'unité d'identification de produit authentique transmet la différence de pression, le niveau d'eau, la température et/ou les informations sur la qualité du carburant du filtre recueillies au moyen d'une carte SIM à un serveur distant via un réseau de communication sans fil pour recevoir ;
(4) le serveur distant traite la différence de pression, le niveau d'eau, la température et/ou les informations sur la qualité du carburant du filtre et surveille le filtre en temps réel ;
(5) le serveur distant réachemine le résultat de la confirmation de l'identification de produit authentique de l'élément filtrant et le résultat du traitement de la différence de pression, du niveau d'eau, de la température et/ou des informations sur la qualité du carburant du filtre à un utilisateur.

6. Procédé de surveillance de filtre selon la revendication 5, **caractérisé en ce que**, lors de l'étape (2), l'unité d'identification de produit authentique recueille aussi des informations de position GPS, des informations de kilométrage de conduite d'un véhicule sur lequel le filtre est installé et d'autres informations de données que le véhicule tout entier est prêt à divulguer via une interface par bus CAN de véhicule.

7. Procédé de surveillance de filtre selon la revendication 5, **caractérisé en ce que**, lors de l'étape (5), le serveur distant réachemine le résultat de l'identification de produit authentique de l'élément filtrant et le résultat du traitement de la différence de pression, du niveau d'eau, de la température et ou des informations sur la qualité du carburant du filtre à l'utilisateur sous la forme d'une application mobile ou d'une applette WeChat.
